# EUROPÄISCHE PATENTSCHRIFT

(11) **EP 2 822 735 B1**
(45) Veröffentlichungstag und Bekanntmachung des Hinweises auf die Patenterteilung: **15.03.2017**
(21) Anmeldenummer: 13702591.2
(22) Anmeldetag: 23.01.2013
(51) Int. Cl.: B25D 17/24, F16F 7/116

(54) **HANDWERKZEUGMASCHINENVORRICHTUNG**
HAND POWER TOOL DEVICE
DISPOSITIF POUR MACHINE-OUTIL PORTATIVE

(30) Priorität: 09.03.2012 DE 102012203757
(43) Veröffentlichungstag der Anmeldung: 14.01.2015
(73) Patentinhaber: Robert Bosch GmbH, 70442 Stuttgart (DE)
(72) Erfinder: WERNER, Immanuel, 72813 St. Johann (DE)
(86) Internationale Anmeldenummer: PCT/EP2013/051190
(87) Internationale Veröffentlichungsnummer: WO 2013/131678

(56) Entgegenhaltungen:
- EP-A2- 1 872 913
- EP-A2- 1 952 950
- WO-A1-2004/082897
- JP-A- S52 109 673

## Beschreibung

### Stand der Technik

Es sind bereits Handwerkzeugmaschinenvorrichtungen nach dem Oberbegriff des Anspruchs 1 bekannt. Diese umfassen zumindest eine Schlagwerkeinheit mit zumindest einem Führungsrohr, und zumindest eine Ausgleichseinheit, die zu einer Reduzierung von Vibrationen in zumindest einem Betriebszustand der Schlagwerkeinheit vorgesehen ist. Die Schlagwerkeinheit weist zumindest ein Ausgleichsmassenelement und zumindest ein Federelement auf und ist zumindest teilweise radial außerhalb des Führungsrohrs angeordnet. Das zumindest eine Federelement und das zumindest eine Ausgleichsmassenelement sind zumindest teilweise in einer Radialrichtung hintereinander angeordnet. Weiterhin ist zumindest ein weiteres Federelement vorgesehen, dessen Durchmesser zumindest im Wesentlichen kleiner ist als ein Durchmesser des zumindest einen Federelements. Derartige Handwerkzeugmaschinenvorrichtungen gehen beispielsweise aus der WO 2004/082897 A1, der EP 1 872 913 A2 und der JP S52 109673 A hervor.

Insbesondere beschreibt WO 2004/082897 A1 eine Handwerkzeugmaschinenvorrichtung mit einer Schlagwerkeinheit, die ein Führungsrohr umfasst, und mit einer Ausgleichseinheit, die zu einer Reduzierung von Vibrationen in zumindest einem Betriebszustand der Schlagwerkeinheit vorgesehen ist, die ein Ausgleichsmassenelement und ein Federelement aufweist und die radial außerhalb des Führungsrohrs angeordnet ist, wobei das Federelement und das Ausgleichsmassenelement teilweise in einer Radialrichtung hintereinander angeordnet sind, wobei das Federelement teilweise radial innerhalb des Ausgleichsmassenelements angeordnet ist.

### Offenbarung der Erfindung

Erfindungsgemäß sind das zumindest eine Federelement zumindest teilweise radial innerhalb des Ausgleichsmassenelements und das zumindest eine weitere Federelement zumindest teilweise radial außerhalb des Ausgleichsmassenelements angeordnet. Dadurch kann eine vorteilhaft kompakte und axiale Baulänge sparende Anordnung der zumindest zwei Federelemente sowie des zumindest einen Ausgleichsmassenelements der Ausgleichseinheit erreicht werden. Mit Vorteil ist zumindest eines der Federelemente, vorzugsweise zumindest beide Federelemente, zumindest im Wesentlichen vollständig radial innerhalb d.h. außerhalb des zumindest einen Ausgleichsmassenelements angeordnet. Durch die erfindungsgemäße Ausgestaltung kann auf konstruktiv einfache Weise eine vorteilhafte Baulängeneinsparung der Ausgleichseinheit und damit insbesondere eine vorteilhaft kompakte und kurzbauende Ausgestaltung der Handwerkzeugmaschinenvorrichtung erreicht werden. Dabei kann eine Länge des zumindest einen Federelements, die für eine Erreichung einer für die Dämpfung von Vibrationen notwendigen Windungssteigung und/oder Windungszahl, beibehalten werden. Durch die erfindungsgemäße Ausgestaltung kann eine Gesamtlänge der Ausgleichseinheit in einer Axialrichtung um zumindest einen Teil einer Länge des zumindest einen Ausgleichsmassenelements reduziert werden. Durch eine zumindest im Wesentlichen symmetrische Überlappung von zumindest zwei Federelementen mit zumindest einem Teilbereich des zumindest einen Ausgleichsmassenelements kann dieser Wert sogar erhöht, insbesondere verdoppelt, werden.

Unter einer "Ausgleichseinheit" soll in diesem Zusammenhang insbesondere eine Einheit verstanden werden, die dazu vorgesehen ist, Vibrationen und/oder eine Übertragung der Vibrationen, insbesondere auf einen Bediener, insbesondere in einem Leerlaufzustand und/oder in einem Lastzustand der Schlagwerkeinheit der Handwerkzeugmaschinenvorrichtung, insbesondere um zumindest 10 %, vorzugsweise um zumindest 20 % und besonders bevorzugt um zumindest 30 % zu reduzieren. In vorteilhafter Weise kann durch die Ausgleichseinheit eine zumindest im Wesentlichen vollständige Reduktion von Vibrationen erreicht werden. Unter "vorgesehen" soll insbesondere speziell ausgestaltet, ausgelegt und/oder ausgestattet verstanden werden. Unter "Vibrationen" sollen insbesondere unerwünschte Bewegungen der Handwerkzeugmaschinenvorrichtung, insbesondere einer Handwerkzeugmaschine, die die Handwerkzeugmaschinenvorrichtung umfasst, verstanden werden, welche insbesondere durch Trägheitsmomente bedingt sind, weiche von Bewegungen und/oder Beschleunigungen von Bauteilen, insbesondere der Schlagwerkeinheit, hervorgerufen werden. Unter "radial außerhalb" soll in diesem Zusammenhang insbesondere verstanden werden, dass zumindest einzelne Bauteile der Ausgleichseinheit, von einer Mittelachse entlang eines Radius nach außen betrachtet, nach dem Führungsrohr angeordnet sind. In einem besonders bevorzugten Ausführungsbeispiel ist die Ausgleichseinheit zumindest im Wesentlichen vollständig radial außerhalb des Führungsrohrs angeordnet. Unter "zumindest im Wesentlichen vollständig" soll in diesem Zusammenhang insbesondere zu zumindest 80 %, vorzugsweise zu zumindest 90 % und besonders bevorzugt zu zumindest 95 % eines Volumens und/oder einer Masse der Ausgleichseinheit verstanden werden. Unter "in Radialrichtung hintereinander angeordnet" soll in diesem Zusammenhang insbesondere verstanden werden, dass das zumindest eine Federelement von einer Rotationsachse, insbesondere des Ausgleichsmassenelements, nach außen betrachtet vor und/oder hinter insbesondere zumindest einem Teilbereich des Ausgleichsmassenelements angeordnet ist.

Des Weiteren wird vorgeschlagen, dass das Ausgleichsmassenelement zumindest ein Federanschlagselement aufweist, das sich in Radialrichtung zumindest teilweise nach innen erstreckt. Ferner wird vorgeschlagen, dass das Ausgleichsmassenelement zumindest ein Federanschlagselement aufweist, das sich in Radialrichtung zumindest teilweise nach außen erstreckt. Unter einem "Federanschlagselement" soll insbesondere ein Element verstanden werden, das dazu vorgesehen ist, zumindest eine Kraftkomponente, insbesondere zumindest im Wesentlichen in Axialrichtung, des zumindest einen Federelements zumindest in einem Betriebszustand der Ausgleichseinheit zumindest teilweise aufzunehmen und/oder abzustützen. Durch die Erstreckung des zumindest einen Federanschlagselements zumindest teilweise in zumindest eine Radialrichtung kann auf konstruktiv einfache Weise eine bevorzugte Reduzierung der Baulänge der Ausgleichseinheit in Axialrichtung erreicht werden.

Des Weiteren wird vorgeschlagen, dass die Handwerkzeugmaschinenvorrichtung zumindest ein Gleitlagerelement aufweist, das zumindest teilweise mit dem zumindest einen Ausgleichsmassenelement verbunden ist. Unter einem "Gleitlagerelement" soll in diesem Zusammenhang insbesondere ein Element verstanden werden, das zumindest im Wesentlichen dazu vorgesehen ist, ein zumindest im Wesentlichen optimales Verhältnis zwischen einem Verschleiß und Gleiteigenschaften zwischen zumindest einem Material, aus dem das zumindest eine Gleitlagerelement zumindest im Wesentlichen hergestellt ist, und zumindest einem Material, aus dem insbesondere das zumindest eine Führungsrohr zumindest im Wesentlichen hergestellt ist, erreichen zu können. Das Gleitlagerelement und das Ausgleichsmassenelement sind vorzugsweise als zumindest im Wesentlichen getrennte Bauteile ausgebildet, die insbesondere fest, miteinander verbunden sind. Das Gleitlagerelement und das Ausgleichsmassenelement sind vorzugsweise kraftschlüssig, formschlüssig und/oder besonders bevorzugt stoffschlüssig miteinander verbunden. In einem besonders bevorzugten Ausführungsbeispiel sind das Gleitlagerelement und das Ausgleichsmassenelement mittels einer Klebeverbindung miteinander verbunden oder das Gleitlagerelement ist zumindest teilweise an das Ausgleichsmassenelement angespritzt. Dadurch können auf konstruktiv einfache und kostengünstige Weise bevorzugt gute Gleiteigenschaften des Ausgleichsmassenelements, insbesondere relativ zu dem zumindest einen Führungsrohr erreicht werden.

Zudem wird vorgeschlagen, dass das zumindest eine Federelement das zumindest eine Ausgleichsmassenelement in zumindest einem montierten Zustand in einer Axialrichtung über zumindest 50 % einer Haupterstreckungslänge des Ausgleichsmassenelements überlappt. Unter einer "Haupterstreckungslänge" soll in diesem Zusammenhang insbesondere eine Länge des Ausgleichsmassenelements verstanden werden, die zumindest in einem montierten Zustand im Wesentlichen parallel zur Axialrichtung der Handwerkzeugmaschinenvorrichtung gemessen wird. Dadurch kann eine bevorzugt geringe Baulänge sowie eine vorteilhaft kompakte Ausgestaltung der Handwerkzeugmaschinenvorrichtung, insbesondere in Axialrichtung erreicht werden.

Zudem wird vorgeschlagen, dass das zumindest eine Federelement und das zumindest eine weitere Federelement zumindest teilweise in Radialrichtung hintereinander angeordnet sind. Dadurch kann eine besonders bevorzugt kompakte Ausgestaltung der Ausgleichseinheit d.h. der Handwerkzeugmaschinenvorrichtung erreicht werden.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen, die innerhalb des Umfangs der Ansprüche liegen, zusammenfassen.

Es zeigen:
- Fig. 1: eine Handwerkzeugmaschine mit einer erfindungsgemäßen Handwerkzeugmaschinenvorrichtung in einer schematischen Darstellung,
- Fig. 2: einen Ausschnitt der erfindungsgemäßen Handwerkzeugmaschinenvorrichtung in einer Schnittdarstellung,
- Fig. 3: ein Ausgleichsmassenelement der Handwerkzeugmaschinenvorrichtung in einer schematischen Schnittdarstellung und
- Fig. 4: ein Ausgleichsmassenelement der Ausgleichseinheit in einer schematischen Schnittdarstellung.

### Beschreibung des Ausführungsbeispiels

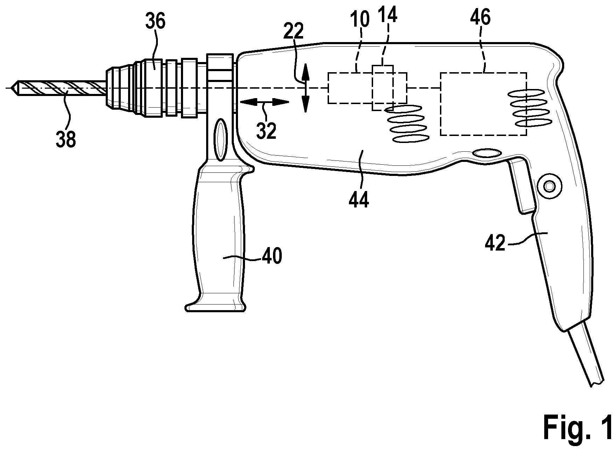

In Figur 1 ist eine von einem Bohrhammer gebildete Handwerkzeugmaschine dargestellt. Die Handwerkzeugmaschine ist von einer Elektrohandwerkzeugmaschine gebildet. In einem Frontbereich der Handwerkzeugmaschine ist eine Werkzeugaufnahme 36 angeordnet, welche zu einer Aufnahme eines Einsatzwerkzeugs 38, insbesondere eines Bohr- oder Meißeleinsatzwerkzeugs, vorgesehen ist. Des Weiteren ist in dem Frontbereich der Handwerkzeugmaschine ein Zusatzhandgriff 40 und an einer dem Frontbereich abgewandten Seite der Handwerkzeugmaschine ein Haupthandgriff 42 angeordnet, über welche die Handwerkzeugmaschine von einem Bediener führbar ist. Der Haupthandgriff 42 ist von einem Teil eines Gehäuses 44 der Handwerkzeugmaschine gebildet. Das Gehäuse 44 der Handwerkzeugmaschine nimmt eine nicht näher dargestellte, von einem Elektromotor gebildete Antriebseinheit 46 auf. Die Antriebseinheit 46 ist dazu vorgesehen, eine Schlagwerkeinheit 10 einer Handwerkzeugmaschinenvorrichtung anzutreiben.

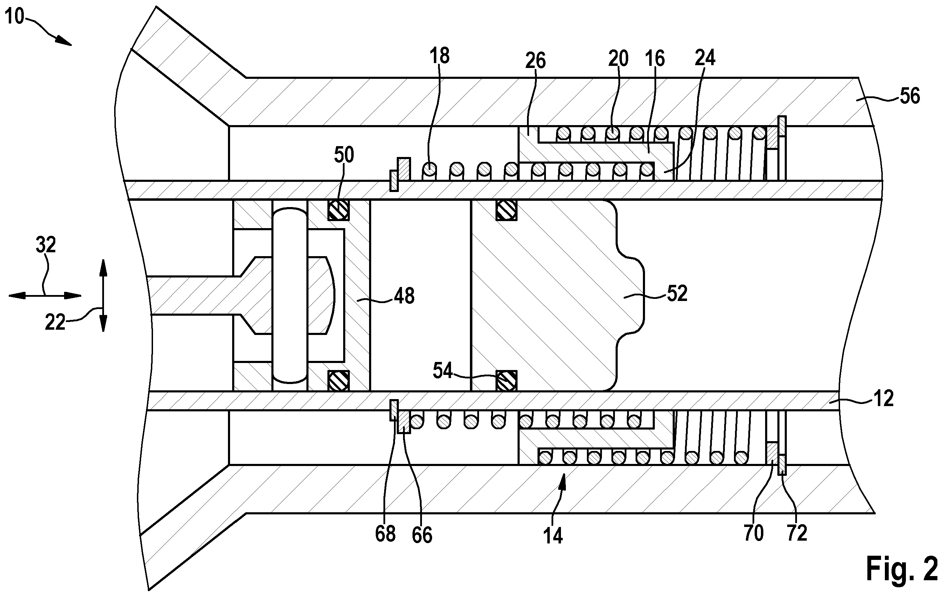

In Figur 2 ist ein Teil der Schlagwerkeinheit 10 dargestellt. Die Schlagwerkeinheit 10 umfasst ein von einem Hammerrohr gebildetes Führungsrohr 12. In dem Führungsrohr 12 ist ein von der Antriebseinheit 46 angetriebener Kolben 48 in Axialrichtung 32 geführt. Der Kolben 48 weist ein von einem Dichtungsring gebildetes Dichtungselement 50 auf. Von der Antriebseinheit 46 zu der Werkezugaufnahme 36 hin betrachtet ist in Axialrichtung 32 hinter dem Kolben 48 ein Schläger 52 angeordnet. Der Schläger 52 ist ebenfalls in Axialrichtung 32 in dem Führungsrohr 12 beweglich gelagert. Der Schläger 52 weist ein von einem Dichtungsring gebildetes Dichtungselement 54 auf. In Axialrichtung 32 ist zwischen dem Kolben 48 und dem Schläger 52 ein Raum angeordnet. Die Dichtungselemente 50, 54 dichten den Raum luftdicht ab, sodass bei einer Bewegung in Axialrichtung 32 des Kolbens 48 und des Schlägers 52 relativ zueinander ein in dem Raum eingeschlossenes Luftvolumen dekomprimiert d.h. komprimiert wird. Dadurch wird in einem Betriebszustand ein Impuls des Kolbens 48 zumindest teilweise auf den Schläger 52 übertragen. Der Schläger 52 gibt den Impuls in einem Betriebszustand wiederum zumindest teilweise an das in der Werkzeugaufnahme 36 gehaltene Einsatzwerkzeug 38 ab.

In Radialrichtung 22 ist nach dem Führungsrohr 12 der Schlagwerkeinheit 10 ein weiteres Führungsrohr 56 angeordnet. Das weitere Führungsrohr 56 ist in Radialrichtung 22 beabstandet zu dem Führungsrohr 12 der Schlagwerkeinheit 10 angeordnet. Zwischen dem Führungsrohr 12 der Schlagwerkeinheit 10 und dem weiteren Führungsrohr 56 ist in Radialrichtung 22 eine Ausgleichseinheit 14 angeordnet, die zu einer Reduzierung von Vibrationen, die in einem Betriebszustand der Schlagwerkeinheit 10, sowohl in einem Leerlaufzustand als auch in einem Lastzustand entstehen, vorgesehen ist. Die Ausgleichseinheit 14 ist in Radialrichtung 22 außerhalb des Führungsrohrs 12 der Schlagwerkeinheit 10 angeordnet und umfasst ein Ausgleichsmassenelement 16 und zwei Federelemente 18, 20. Die Ausgleichseinheit 14 ist bezüglich einer Federsteifigkeit der Federelemente 18, 20 und der Masse des Ausgleichsmassenelements 16 an eine Erregerschwingung der Schlagwerkeinheit 10 angepasst.

Das Ausgleichsmassenelement 16 ist in Axialrichtung 32 relativ zu dem Führungsrohr 12 der Schlagwerkeinheit 10 und dem weiteren Führungsrohr 56 verschiebbar gelagert. Das Ausgleichsmassenelement 16 ist gegen die Federelemente 18, 20 in Axialrichtung 32 verschiebbar gelagert. Das Ausgleichsmassenelement 16 der Ausgleichseinheit 14 bildet einen Gegenschwinger, der in einem Betriebszustand gegenphasig zu der von der Schlagwerkeinheit 10 verursachten Erregerschwingung schwingt und so Beschleunigungen entgegenwirkt und diese reduziert.

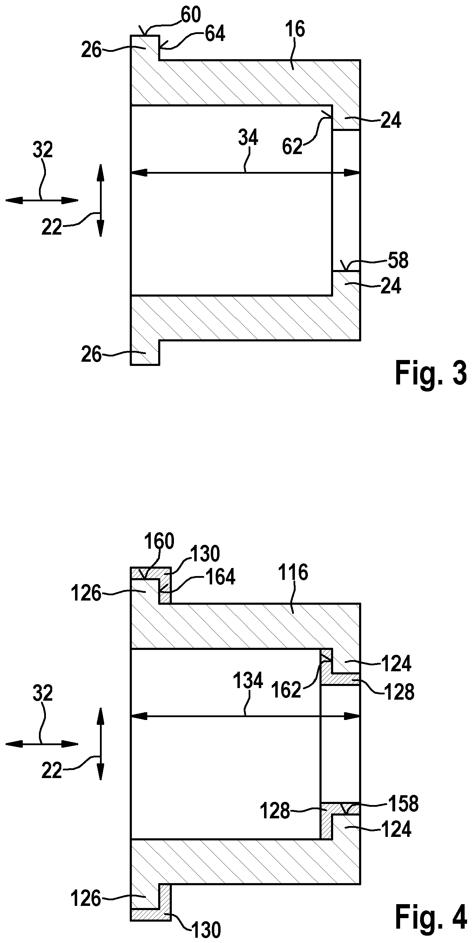

Das Ausgleichsmassenelement 16 ist hohlzylinderförmig ausgebildet (Figur 3). In Axialrichtung 32 betrachtet, ist an den Endbereichen des hohlzylinderförmigen Ausgleichsmassenelements 16 jeweils ein Federanschlagselement 24, 26 angeordnet. Die Federanschlagselemente 24, 26 sind mit dem Ausgleichsmassenelement 16 verbunden. Die Federanschlagselemente 24, 26 sind einstückig mit dem Ausgleichsmassenelement 16 ausgebildet. Die Federanschlagselemente 24, 26 sind ringförmig ausgebildet. Die Federanschlagselemente 24, 26 weisen zueinander verschiedene Durchmesser auf. Eines der beiden Federanschlagselemente 24 weist einen Außendurchmesser auf, der einem Innendurchmesser des hohlzylinderförmigen Ausgleichsmassenelements 16 entspricht. Das andere Federanschlagselement 26 der beiden Federanschlagselemente 24, 26 weist einen Innendurchmesser auf, der einem Außendurchmesser des hohlzylinderförmigen Ausgleichsmassenelements 16 entspricht. Das Federanschlagselement 24 erstreckt sich, von dem hohlzylinderförmigen Ausgleichsmassenelement 16 betrachtet, in Radialrichtung 22 nach innen. Das Federanschlagselement 26 erstreckt sich, von dem hohlzylinderförmigen Ausgleichsmassenelement 16 betrachtet, in Radialrichtung 22 nach außen.

Die Federanschlagselemente 24, 26 bilden jeweils eine senkrecht zur Radialrichtung 22 gerichtete Führungsfläche 58, 60. Das Ausgleichsmassenelement 16 ist mittels der Führungsfläche 58 des Federanschlagselements 24 in Radialrichtung 22 gegen das Führungsrohr 12 der Schlagwerkeinheit 10 abgestützt und in Axialrichtung 32 an diesem geführt. Das Ausgleichsmassenelement 16 ist mittels der Führungsfläche 60 des Federanschlagselements 26 in Radialrichtung 22 gegen das weitere Führungsrohr 56 abgestützt und in Axialrichtung 32 in diesem geführt.

Die Federanschlagselemente 24, 26 bilden eine senkrecht zur Axialrichtung 32 gerichtete Anschlagsfläche 62, 64, an der sich in einem montierten Zustand der Handwerkzeugmaschinenvorrichtung jeweils eines der Federelemente 18, 20 mit jeweils einem Ende in Axialrichtung 32 abstützt. Jeweils eines der Federelemente 18, 20 und ein Teilbereich des Ausgleichsmassenelements 16 sind in Radialrichtung 22 hintereinander angeordnet. Die Federelemente 18, 20 erstrecken sich in einem montierten Zustand der Handwerkzeugmaschinenvorrichtung parallel zur Axialrichtung 32. Die Federelemente 18, 20 sind in einem montierten Zustand der Handwerkzeugmaschinenvorrichtung so angeordnet, dass sie das Ausgleichsmassenelement 16 in Axialrichtung 32 jeweils über einen Bereich, der mehr als 50 % einer Haupterstreckungslänge 34 des Ausgleichsmassenelements 16 umfasst, überlappen.

Die Federelemente 18, 20 weisen zueinander unterschiedliche Durchmesser auf. Eines der beiden Federelemente 18, 20 weist einen größeren Durchmesser auf als das hohlzylinderförmige Ausgleichsmassenelement 16. Der Durchmesser des Federelements 20 entspricht einem mittleren Durchmesser des Federanschlagelements 26. Das Federelement 20 ist in Radialrichtung 22 außerhalb des Ausgleichsmassenelements 16 angeordnet. Das andere der Federelemente 18, 20 weist einen kleineren Durchmesser auf als das hohlzylinderförmige Ausgleichsmassenelement 16. Der Durchmesser des Federelements 18 entspricht einem mittleren Durchmesser des Federanschlagelements 24. Das Federelement 18 ist in Radialrichtung 22 innerhalb des Ausgleichsmassenelements 16 angeordnet. Der Durchmesser des Federelements 18 ist kleiner als der Durchmesser des Federelements 20. Die Federelemente 18, 20 sind in Radialrichtung 22 in einem Teilbereich hintereinander angeordnet.

Ein Ende des Federelements 18, das dem an der Anschlagsfläche 62 des Federanschlagselements 24 abgestützten Ende des Federelements 18 gegenüber angeordnet ist, ist an einem weiteren Federanschlagselement 66 abgestützt. Das weitere Federanschlagselement 66 ist in Radialrichtung 22 außerhalb des Führungsrohrs 12 der Schlagwerkeinheit 10 angeordnet und liegt an diesem entlang eines Außenumfangs des Führungsrohrs 12 an. In Axialrichtung 32 ist das weitere Federanschlagselement 66 von einem Sicherungselement 68 gehalten. Das Sicherungselement 68 ist von einem Sprengring gebildet. Das Sicherungselement 68 ist in einer Nut in dem Führungsrohr 12 der Schlagwerkeinheit 10 angeordnet und ragt in Radialrichtung 22 über die Nut hinaus.

Ein Ende des Federelements 20, das dem an der Anschlagsfläche 64 des Federanschlagselements 26 abgestützten Ende des Federelements 20 gegenüber angeordnet ist, ist an einem weiteren Federanschlagselement 70 abgestützt. Das weitere Federanschlagselement 70 ist in Radialrichtung 22 innerhalb des weiteren Führungsrohrs 56 angeordnet und liegt an diesem entlang eines Innenumfangs des weiteren Führungsrohrs 56 an. In Axialrichtung 32 ist das weitere Federanschlagselement 70 von einem Sicherungselement 72 gehalten. Das Sicherungselement 72 ist von einem Sprengring gebildet. Das Sicherungselement 72 ist in einer Nut in dem weiteren Führungsrohr 56 angeordnet und ragt in Radialrichtung 22 über die Nut hinaus. Es ist jedoch auch denkbar, dass die weiteren Federanschlagselemente 66, 70 einstückig mit dem Führungsrohr 12 der Schlagwerkeinheit 10 d.h. mit dem weiteren Führungsrohr 56 ausgebildet sind. Dadurch könnte auf die Sicherungselemente 68, 72 verzichtet werden.

Die nachfolgenden Beschreibungen und die Zeichnungen des weiteren Ausführungsbeispiels beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels verwiesen werden kann. Zur Unterscheidung der Ausführungsbeispiele ist den Bezugszeichen des weiteren Ausführungsbeispiels die Ziffer 1 vorangestellt.

In Figur 4 ist ein Ausgleichsmassenelement 116 einer Ausgleichseinheit 14 einer Handwerkzeugmaschinenvorrichtung dargestellt, das in Aufbau und Funktion dem bereits beschriebenen Ausgleichsmassenelement 16 entspricht. Mit dem Ausgleichsmassenelement 116 sind jedoch zusätzlich zwei Gleitlagerelemente 128, 130 verbunden. Die Gleitlagerelemente 128, 130 sind von Gleitbuchsen gebildet. Die Gleitlagerelemente 128, 130 sind jeweils L-förmig ausgestaltet. Die Gleitlagerelemente 128, 130 erstrecken sich in einem montierten Zustand der Handwerkzeugmaschinenvorrichtung mit jeweils einem Schenkel parallel zu einer Führungsfläche 158, 160 und einer Anschlagsfläche 162, 164 von Federanschlagselementen 124, 126 des Ausgleichsmassenelements 116. Die Gleitlagerelemente 128, 130 liegen in einem montierten Zustand der Handwerkzeugmaschinenvorrichtung mit jeweils einem Schenkel an der Führungsfläche 158, 160 und an der Anschlagsfläche 162, 164 der Federanschlagselemente 124, 126 an und überdecken diese vollständig. Ein Ende eines Federelements 18, 20 der Ausgleichseinheit 14 stützt sich in einem montierten Zustand der Handwerkzeugmaschinenvorrichtung jeweils an dem Schenkel des Gleitlagerelements 128, 130 ab, der die Anschlagsfläche 162, 164 des Federanschlagselements 124, 126 überdeckt. Die Gleitlagerelemente 128, 130 sind stoffschlüssig mit den Federanschlagselementen 124, 126 verbunden. Die Gleitlagerelemente 128, 130 sind mit den Federanschlagselementen 124, 126 verklebt. Es sind jedoch auch andere, einem Fachmann als sinnvoll erscheinende Ausgestaltungen der Verbindung zwischen den Gleitlagerelementen 128, 130 und den Federanschlagselementen 124, 126 denkbar. Vor allem wäre es denkbar, dass die Gleitlagerelemente 128, 130 kraftschlüssig mittels der Federelemente 18, 20 in einem montierten Zustand der Handwerkzeugmaschinenvorrichtung an die Federanschlagselemente 124, 126 des Ausgleichsmassenelement 116 angedrückt und somit kraftschlüssig und lösbar mit den Federanschlagselementen 124, 126 des Ausgleichsmassenelement 116 verbunden sind.

## Patentansprüche

1. Handwerkzeugmaschinenvorrichtung mit zumindest einer Schlagwerkeinheit (10), die zumindest ein Führungsrohr (12) umfasst, und mit zumindest einer Ausgleichseinheit (14), die zu einer Reduzierung von Vibrationen in zumindest einem Betriebszustand der Schlagwerkeinheit (10) vorgesehen ist, die zumindest ein Ausgleichsmassenelement (16, 116) und zumindest ein Federelement (20) aufweist und die zumindest teilweise radial außerhalb des Führungsrohrs (12) angeordnet ist, wobei das zumindest eine Federelement (20) und das zumindest eine Ausgleichsmassenelement (16, 116) zumindest teilweise in einer Radialrichtung (22) hintereinander angeordnet sind und zumindest ein weiteres Federelement (18) vorgesehen ist, dessen Durchmesser zumindest im Wesentlichen kleiner ist als ein Durchmesser des zumindest einen Federelements (20), wobei das zumindest eine weitere Federelement (18) zumindest teilweise radial innerhalb des Ausgleichsmassenelements (16, 116) angeordnet ist und das zumindest eine Federelement (20) zumindest teilweise radial außerhalb des Ausgleichsmassenelements (16, 116) angeordnet ist.

2. Handwerkzeugmaschinenvorrichtung nach Anspruch 1, **dadurch gekennzeichnet, dass** das Ausgleichsmassenelement (16, 116) zumindest ein Federanschlagselement (24, 124) aufweist, das sich in Radialrichtung zumindest teilweise nach innen erstreckt.

3. Handwerkzeugmaschinenvorrichtung nach einem der vorhergehenden Ansprüche, **dadurch gekennzeichnet, dass** das Ausgleichsmassenelement (16, 116) zumindest ein Federanschlagselement (26, 126) aufweist, das sich in Radialrichtung zumindest teilweise nach außen erstreckt.

4. Handwerkzeugmaschinenvorrichtung nach einem der vorhergehenden Ansprüche, **gekennzeichnet durch** zumindest ein Gleitlagerelement (128, 130), das zumindest teilweise mit dem zumindest einen Ausgleichsmassenelement (116) verbunden ist.

5. Handwerkzeugmaschinenvorrichtung nach einem der vorhergehenden Ansprüche, **dadurch gekennzeichnet, dass** das zumindest eine Federelement (20) das zumindest eine Ausgleichsmassenelement (16, 116) in zumindest einem montierten Zustand in einer Axialrichtung (32) über zumindest 50 % einer Haupterstreckungslänge (34, 134) des Ausgleichsmassenelements (16, 116) überlappt.

6. Handwerkzeugmaschinenvorrichtung zumindest nach Anspruch 1, **dadurch gekennzeichnet, dass** das zumindest eine Federelement (20) und das zumindest eine weitere Federelement (18) zumindest teilweise in Radialrichtung (22) hintereinander angeordnet sind.

7. Handwerkzeugmaschine mit einer Handwerkzeugmaschinenvorrichtung nach einem der vorhergehenden Ansprüche.

## Claims

1. Portable power tool device having at least one percussion mechanism unit (10) which comprises at least one guide tube (12), and having at least one compensating unit (14) which is provided to reduce vibrations in at least one operating state of the percussion mechanism unit (10), which has at least one compensating mass element (16, 116) and at least one spring element (20) and which is arranged radially outside the guide tube (12) at least in part, wherein the at least one spring element (20) and the at least one compensating mass element (16, 116) are arranged in succession in a radial direction (22) at least in part and at least one further spring element (18) is provided, the diameter of which is at least substantially smaller than a diameter of the at least one spring element (20), wherein the at least one further spring element (18) is arranged radially inside the compensating mass element (16, 116) at least in part and the at least one spring element (20) is arranged radially outside the compensating mass element (16, 116) at least in part.

2. Portable power tool device according to Claim 1, **characterized in that** the compensating mass element (16, 116) has at least one spring stop element (24, 124) which extends inwards at least in part in the radial direction.

3. Portable power tool device according to either of the preceding claims, **characterized in that** the compensating mass element (16, 116) has at least one spring stop element (26, 126) which extends outwards at least in part in the radial direction.

4. Portable power tool device according to one of the preceding claims, **characterized by** at least one plain bearing element (128, 130) which is connected at least in part to the at least one compensating mass element (116).

5. Portable power tool device according to one of the preceding claims, **characterized in that** the at least one spring element (20) overlaps the at least one compensating mass element (16, 116) along at least 50% of a main extension length (34, 134) of the compensating mass element (16, 116) in an axial direction (32) in at least one mounted state.

6. Portable power tool device at least according to Claim 1, **characterized in that** the at least one spring element (20) and the at least one further spring element (18) are arranged in succession in a radial direction (22) at least in part.

7. Portable power tool having a portable power tool device according to one of the preceding claims.

## Revendications

1. Dispositif pour machine-outil portative comprenant au moins une unité de percussion (10) qui comprend au moins un tube de guidage (12) et au moins une unité d'équilibrage (14) qui est prévue pour réduire les vibrations dans au moins un état de fonctionnement de l'unité de percussion (10), qui présente au moins un élément de masse d'équilibrage (16, 116) et au moins un élément de ressort (20) et qui est disposée au moins en partie radialement à l'extérieur du tube de guidage (12), l'au moins un élément de ressort (20) et l'au moins un élément de masse d'équilibrage (16, 116) étant disposés au moins en partie l'un derrière l'autre dans une direction radiale (22) et au moins un élément de ressort supplémentaire (18) étant prévu, dont le diamètre est au moins essentiellement inférieur à un diamètre de l'au moins un élément de ressort (20), l'au moins un élément de ressort supplémentaire (18) étant disposé au moins en partie radialement à l'intérieur de l'élément de masse d'équilibrage (16, 116) et l'au moins un élément de ressort (20) étant disposé au moins en partie radialement à l'extérieur de l'élément de masse d'équilibrage (16, 116).

2. Dispositif pour machine-outil portative selon la revendication 1, **caractérisé en ce que** l'élément de masse d'équilibrage (16, 116) présente au moins un élément de butée à ressort (24, 124) qui s'étend au moins en partie vers l'intérieur dans la direction radiale.

3. Dispositif pour machine-outil portative selon l'une quelconque des revendications précédentes, **caractérisé en ce que** l'élément de masse d'équilibrage (16, 116) présente au moins un élément de butée à ressort (26, 126) qui s'étend au moins en partie vers l'extérieur dans la direction radiale.

4. Dispositif pour machine-outil portative selon l'une quelconque des revendications précédentes, **caractérisé par** au moins un élément de palier lisse (128, 130) qui est connecté au moins en partie à l'au moins un élément de masse d'équilibrage (116).

5. Dispositif pour machine-outil portative selon l'une quelconque des revendications précédentes, **caractérisé en ce que** l'au moins un élément de ressort (20) recouvre l'au moins un élément de masse d'équilibrage (16, 116) dans au moins un état monté dans une direction axiale (32) sur au moins 50 % d'une longueur d'étendue principale (34, 134) de l'élément de masse d'équilibrage (16, 116).

6. Dispositif pour machine-outil portative selon au moins la revendication 1, **caractérisé en ce que** l'au moins un élément de ressort (20) et l'au moins un élément de ressort supplémentaire (18) sont disposés l'un derrière l'autre au moins en partie dans la direction radiale (22).

7. Machine-outil portative comprenant un dispositif pour machine-outil portative selon l'une quelconque des revendications précédentes.
